# EUROPEAN PATENT APPLICATION

(11) **EP 4 557 847 A1**
(43) Date of publication of application: **21.05.2025**
(21) Application number: 24202549.2
(22) Date of filing: 25.09.2024
(51) Int. Cl.: H04W 56/00

(54) **SYNCHRONIZATION CONTROL METHOD FOR WIRELESS AUDIO SYSTEM AND WIRELESS AUDIO SYSTEM**

(30) Priority: 14.11.2023 CN 202311515044
(71) Applicant: Harman International Industries, Inc., Stamford, Connecticut 06901 (US)
(72) Inventor: Qin, Zheng, Shenzhen, 518067 (CN); Yu, Ling, Shenzhen, 518067 (CN); Lin, Jiawei, Shenzhen, 518067 (CN)
(74) Representative: Kraus & Lederer PartGmbB

(57) **Abstract**

A synchronization control method for a wireless audio system and a wireless audio system are disclosed, where the wireless audio system includes a master device and a plurality of slave devices, the master device communicating wirelessly with the plurality of slave devices and the master device sending audio information to the plurality of slave devices at a preset audio transmission cycle; and the method includes: the master device being further configured to send broadcast information to the plurality of slave devices at a preset broadcast cycle, where the broadcast information includes master device clock information and control command information; and each of the plurality of slave devices performing a corresponding operation based on the broadcast information; and where at the same moment, the master device sends only one of the audio information and the broadcast information.

## Description

### Technical Field

The present invention relates to the field of control, and more particularly to a synchronization control method for a wireless audio system and a wireless audio system.

### Background

As wireless audio systems are widely used in the civil and commercial sectors, wireless audio systems are facing higher requirements. Especially in a wireless audio system, it is often necessary to perform synchronization control of devices (display devices for light show rendering, etc.) within the system based on audio (e.g., music streaming), and to make the operation of the corresponding devices (e.g., the corresponding displays) accurately synchronized with the audio signals.

Currently, when a single display device exists in a wireless audio system, the synchronization of this device with the audio signal can be well controlled. However, when there is a plurality of devices in the wireless audio system, on the one hand, it is difficult to achieve precise synchronization control among the plurality of devices, which leads to the fact that when the wireless audio system needs to perform a predetermined operation, part of the devices execute the predetermined operation while part of the devices do not execute it, making it impossible to realize the corresponding function of the wireless audio system, or leading to a poor user experience. On the other hand, the transmission of control command information among the plurality of devices usually employs a different transmission mechanism than the transmission of audio information, which leads to complex signal transmission rules in the wireless audio system.

Therefore, there is a need for an accurate and reliable synchronization control of a plurality of devices in a wireless audio system under the premise of achieving good functionality of the wireless audio system, and the synchronization control process is simple and convenient with high reliability and robustness.

### Summary of the Invention

In view of the above problems, the present invention provides a synchronization control method for a wireless audio system and a wireless audio system. Using the synchronization control method for a wireless audio system provided by the present invention, accurate and reliable synchronization control of a plurality of devices in the wireless audio system can be achieved on the basis of achieving good functionality of the wireless audio system, and the synchronization control process is simple and convenient with high reliability and robustness.

According to an aspect of the present disclosure, a synchronization control method for a wireless audio system is proposed, where the wireless audio system includes a master device and a plurality of slave devices, the master device communicating wirelessly with the plurality of slave devices and the master device sending audio information to the plurality of slave devices at a preset audio transmission cycle; and the method includes: the master device being further configured to send broadcast information to the plurality of slave devices at a preset broadcast cycle, where the broadcast information includes master device clock information and control command information; and each of the plurality of slave devices receiving the broadcast information from the master device at the preset broadcast cycle and performing a corresponding operation based on the broadcast information; and where at the same moment, the master device sends only one of the audio information and the broadcast information.

In some embodiments, the preset broadcast cycle is different from the preset audio transmission cycle and the preset audio transmission cycle is less than the preset broadcast cycle.

In some embodiments, the control command information includes at least one of audio display control information, playback control information, and audio feature information.

In some embodiments, when the preset broadcast cycle is reached, the master device is configured as follows: judge whether the preset audio transmission cycle is reached; and in a case where the preset audio transmission cycle is not reached, the master device is configured to send the broadcast information; and in a case where the preset audio transmission cycle is reached, the master device is configured to send the audio information and skip this preset broadcast cycle.

In some embodiments, the master device is further configured to: in a case of skipping this preset broadcast cycle, save this broadcast information and use it as broadcast information in a next preset broadcast cycle.

In some embodiments, the master device is configured so that: in response to sending the broadcast information, the master device performs a corresponding operation based on the control command information.

In some embodiments, the master device includes a control module and a communication module, and where the control module is configured so that: when the preset broadcast cycle is reached, the control module generates the broadcast information based on the master device clock information and a current control command and transmits the broadcast information to the communication module; and when the preset audio transmission cycle is reached, the control module acquires audio information to be transmitted and sends the audio information to be transmitted to the communication module, where the communication module is configured to: determine, based on a preset rule, target sending information according to information from the control module, send the target sending information, and transmit a corresponding sending feedback to the communication module.

In some embodiments, in a case where the communication device receives the broadcast information from the control device, the communication device is configured as follows: judge whether there exists audio information to be transmitted in the communication device; and in a case where there exists no audio information to be transmitted in the communication device, the communication device sends the broadcast information and transmits a broadcast normal sending feedback to the control module; and in a case where there exists audio information to be transmitted in the communication device, the communication device sends the audio information to be transmitted and transmits a broadcast delayed sending feedback to the control module.

In some embodiments, the control module is configured to: in response to the broadcast normal sending feedback, control the master device according to the broadcast information to perform a corresponding operation; and in response to the broadcast delayed sending feedback, retain the current broadcast information, and wait for a next preset broadcast cycle.

In some embodiments, each of the plurality of slave devices receiving the broadcast information from the master device at the preset broadcast cycle and performing a corresponding operation based on the broadcast information includes: when the preset broadcast cycle is reached, receiving the broadcast information from the master device; calibrating the slave device clock based on the master device clock information in the broadcast information; and performing the corresponding operation based on the control command information in the broadcast information.

In some embodiments, performing the corresponding operation based on the control command information in the broadcast information includes: acquiring a device type of the slave device; determining, based on the device type of the slave device, target control command information corresponding to the device type of the slave device from the control command information; and performing the corresponding operation based on the target control command information.

In some embodiments, when the slave device reaches the preset broadcast cycle, the slave device is configured as follows: judge whether the preset audio transmission cycle is reached; and in a case where the preset audio transmission cycle is not reached, the slave device is configured to receive the broadcast information; and in a case where the preset audio transmission cycle is reached, the slave device is configured to receive the audio information and skip this preset broadcast cycle.

In some embodiments, a communication mode between the master device and the slave device is a Bluetooth communication mode, and the master device and the slave device comply with a Bluetooth communication protocol.

In some embodiments, the slave device includes at least one of a lighting device, an acoustic device, a headphone device, a keyboard device, and a microphone device.

According to another aspect of the present disclosure, a wireless audio system is proposed, including: a master device; and a plurality of slave devices, the master device communicating wirelessly with the plurality of slave devices; and where the wireless audio system is configured to execute the synchronization control method for a wireless audio system as previously described.

### Description of the Drawings

In order to more clearly illustrate the technical solutions of the embodiments of the present invention, the accompanying drawings to be used in the description of the embodiments will be briefly introduced below, and it will be obvious that the accompanying drawings in the following description are only some of the embodiments of the present invention, and that for those of ordinary skill in the art, other accompanying drawings can be obtained based on these drawings without making creative labor. The following accompanying drawings are not intentionally drawn in equal proportions to the actual dimensions, with the emphasis on illustrating the main idea of the present invention.
FIG. 1 illustrates an example diagram of a wireless audio system 100 according to an embodiment of the present disclosure;
FIG. 2 illustrates an exemplary flowchart of a synchronization control method 100 for a wireless audio system 200, according to an embodiment of the present disclosure;
FIG. 3 illustrates an exemplary flowchart of a process S 101 according to an embodiment of the present disclosure; and
FIG. 4 illustrates an exemplary flowchart of a process S 102 according to an embodiment of the present disclosure.

### Detailed Description

The technical solutions in embodiments of the present invention will be clearly and completely described below in conjunction with the accompanying drawings, and it will be apparent that the embodiments described are only some embodiments of the present invention and not all of them. Based on the embodiments of the present invention, all other embodiments obtained by those of ordinary skill in the art without making creative labor fall within the scope of protection of the present invention.

As illustrated in the present application and the claims, unless clearly indicated in the context as an exception, the words "one," "a," "a kind of," and/or "the " and the like do not refer specifically to the singular, but may also include the plural. In general, the terms "including" and "comprising" indicate only the inclusion of clearly identified steps and elements, which do not constitute an exclusive list, and the method or the device may also contain other steps or elements.

Although the present application makes various references to certain modules in the system according to the embodiments of the present application, any number of different modules may be used and run on the user terminal and/or server. The modules described are merely illustrative, and different aspects of the systems and methods may use different modules.

Flowcharts are used in the present application to illustrate operations performed by a system according to an embodiment of the present application. It should be understood that the preceding or following operations are not necessarily performed in a precise sequence. Instead, various steps may be processed in a reverse order or simultaneously, as required. Meanwhile, it is also possible to add other operations to these processes or to remove a step or steps from these processes.

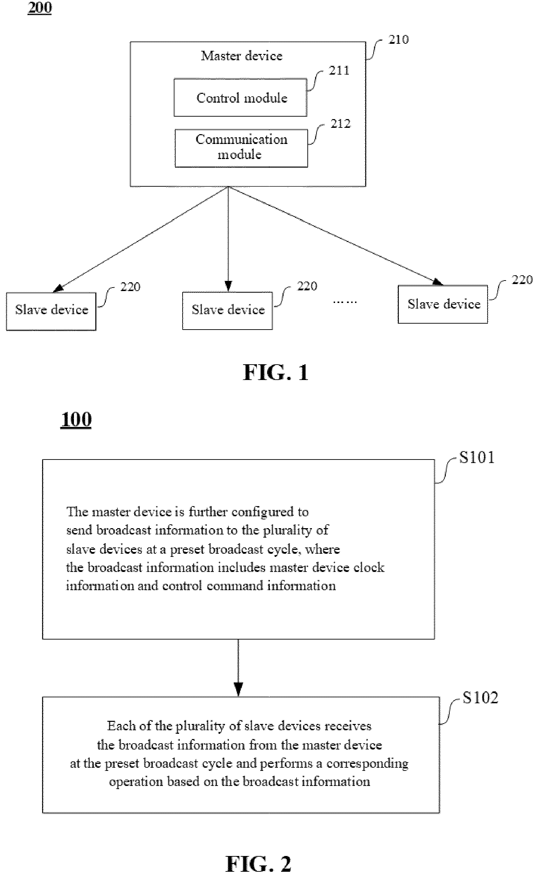

According to an aspect of the present disclosure, a synchronization control method 100 for a wireless audio system 200 is proposed. FIG. 1 illustrates an example diagram of a wireless audio system 100 according to an embodiment of the present disclosure.

Referring to FIG. 1, the wireless audio system 200 may include, for example, a master device 210 and a plurality of slave devices 220, where the master device 210 communicates wirelessly with the plurality of slave devices 220, and the master device 210 sends audio information to the plurality of slave devices 220 at a preset audio transmission cycle, and the slave devices 220 receive the audio information from the master device 210 at the preset audio transmission cycle, for example.

It should be understood that the wireless audio system refers to an audio system that implements transmission of information among devices in the audio system in a wireless communication manner. It should be understood that the master and slave devices in the present disclosure may be audio playback devices, or may be controller devices, input and output devices, LED and other display devices. Embodiments of the present disclosure are not limited by the specific types of the devices in this audio system.

The preset audio transmission cycle is a cycle for transmitting audio information from the master device to the slave devices, i.e., whenever the preset audio transmission cycle is reached, the master device transmits audio information to the slave devices once. It should be understood that according to actual communication needs, for example, a set of several duplicate audio information may be transmitted in a single transmission to improve the reliability of the audio transmission.

The preset audio transmission cycle may be preset by the system, or may be manually set by the user, for example. Embodiments of the present disclosure are not limited by the specific manner of setting this preset audio transmission cycle and its contents.

By setting the master device to send the audio information to the plurality of slave devices at the preset audio transmission cycle, the audio information in this wireless audio system can be synchronized between the master device and the plurality of slave devices.

FIG. 2 illustrates an exemplary flowchart of a synchronization control method 100 for a wireless audio system 200, according to an embodiment of the present disclosure.

Referring to FIG. 2, the synchronization control method 100 includes the following steps. First, in step S101, the master device is further configured to send broadcast information to the plurality of slave devices at a preset broadcast cycle, where the broadcast information includes master device clock information and control command information.

The preset broadcast cycle refers to a cycle in which the master device sends broadcast information to the slave devices, i.e., whenever a preset broadcast cycle is reached, the master device sends broadcast information to the slave devices once.

The preset broadcast cycle may be preset by the system, or may be manually set by the user, for example. Embodiments of the present disclosure are not limited by the specific manner of setting this preset broadcast cycle and its contents.

The preset broadcast cycle may for example be greater than the preset audio transmission cycle. For example, the cycle duration of the preset broadcast cycle is twice or three times the cycle duration of the preset audio transmission cycle. Alternatively, the preset broadcast cycle may be the same as the preset audio transmission cycle, but actually have different transmission moments. It should be understood that embodiments of the present disclosure are not limited by the duration relationship between this preset broadcast cycle and the preset audio transmission cycle.

The broadcast information refers to relevant information for enabling synchronization control of the plurality of slave devices. The master device clock information refers to information characterizing a timing state currently possessed by the master device, which may be, for example, a clock signal, where the clock information may be acquired, for example, from a timer of the master device.

The control command information refers to relevant information for realizing the control of the slave devices, and according to the actual needs, the control command information may include, for example, audio display control information, playback control information, audio feature information, and the like. Embodiments of the present disclosure are not limited by the specific composition of this control command information.

Next, in step S 102, each of the plurality of slave devices receives the broadcast information from the master device at the preset broadcast cycle and performs a corresponding operation based on the broadcast information.

It should be understood that each of the slave devices may, for example, perform the same operation based on the broadcast information or may also perform a different operation corresponding to the broadcast information based on the broadcast information. Embodiments of the present disclosure are not limited thereto.

At the same moment, the master device sends only one of the audio information and the broadcast information.

For example, the audio transmission and the broadcast process may, for example, comply with the same communication standard and use different communication channels.

Based on the foregoing, in the present application, by means of settings of, on the basis of the master device in the wireless audio system sending the audio information to the plurality of slave devices at the preset audio transmission cycle, further sending the broadcast information to the plurality of slave devices at the preset broadcast cycle, and each of the plurality of slave devices performing a corresponding operation based on the broadcast information, and the master device being made to send only one of the audio information and the broadcast information, it is made possible, via the synchronization control method, to send the audio information or the broadcast information via the master device in a time-division multiplexing manner, so that on the basis of realizing audio stream transmission with high real-time performance, good synchronization control of a plurality of devices in the wireless audio system can be further realized in a simple and convenient manner, and this synchronization control method has high reliability and real-time performance.

In some embodiments, the preset broadcast cycle is different from the preset audio transmission cycle and the preset audio transmission cycle is less than the preset broadcast cycle.

For example, the duration of the preset broadcast cycle may be twice or three times the duration of the preset audio transmission cycle. However, it should be understood that embodiments of the present disclosure are not limited thereto.

For example, the preset audio transmission cycle may be 20 ms or 30 ms, and the preset broadcast cycle may be 90 ms or 100 ms. However, it should be understood that embodiments of the present disclosure are not limited thereto.

Based on the foregoing, in the present application, by setting this preset audio transmission cycle to be less than the preset broadcast cycle, the duration of the preset audio transmission cycle is made shorter, so that audio signal transmission can be realized at a shorter time interval, thereby enabling audio information or audio streams of the master device to be transmitted to the slave devices with high real-time performance to satisfy the basic audio synchronization function of the audio system. Furthermore, by setting this preset audio transmission cycle to be smaller than the preset broadcast cycle, it is made possible to carry out the broadcast process with a longer cycle relative to the audio transmission cycle, thereby well achieving synchronization of the control command information between the master and the slave devices, i.e., achieving synchronization control of the individual devices in the audio system, on the basis of ensuring transmission of the audio with high real-time performance.

In some embodiments, the control command information includes at least one of audio display control information, playback control information, and audio feature information.

The audio display control information may, for example, be information for controlling the visual display process of that audio signal, and, depending on the actual needs, it may, for example, be the display data of a single light (e.g., the turning on and off of the light, the blinking frequency, the color data of the light, or the brightness data of the light, and so on), or it may also be control data for a plurality of LEDs in the LED array, for example, for controlling the brightness, blinking, and color of individual LEDs in the LED array, as well as the array pattern of that LED array, or the like. Embodiments of the present disclosure are not limited thereto.

The playback control information may be, for example, information for controlling the audio playback process of each device in the audio system, for example, controlling the audio playback or stop of each device, adjusting the audio volume, or the like. Embodiments of the present disclosure are not limited thereto.

The audio feature information may, for example, be information related to the audio characteristic, and the audio characteristic information may, for example, be subsequently further processed by a device in the wireless audio system, for example, to generate audio visualization information based on the audio feature information or to store or upload the audio feature information, and the like.

The audio feature information may, for example, include audio beat information, audio energy information, audio type information, and the like. Embodiments of the present disclosure are not limited thereto.

It should be understood that, according to the actual needs, the control command information may further include other command information.

Based on the foregoing, in the present application, by setting the control command information to include at least one of the audio display control information, the playback control information, and the audio feature information, it is made possible to realize good synchronization control of a plurality of aspects of the wireless audio system, such as the display, playback, and audio feature elements, based on the synchronization control method.

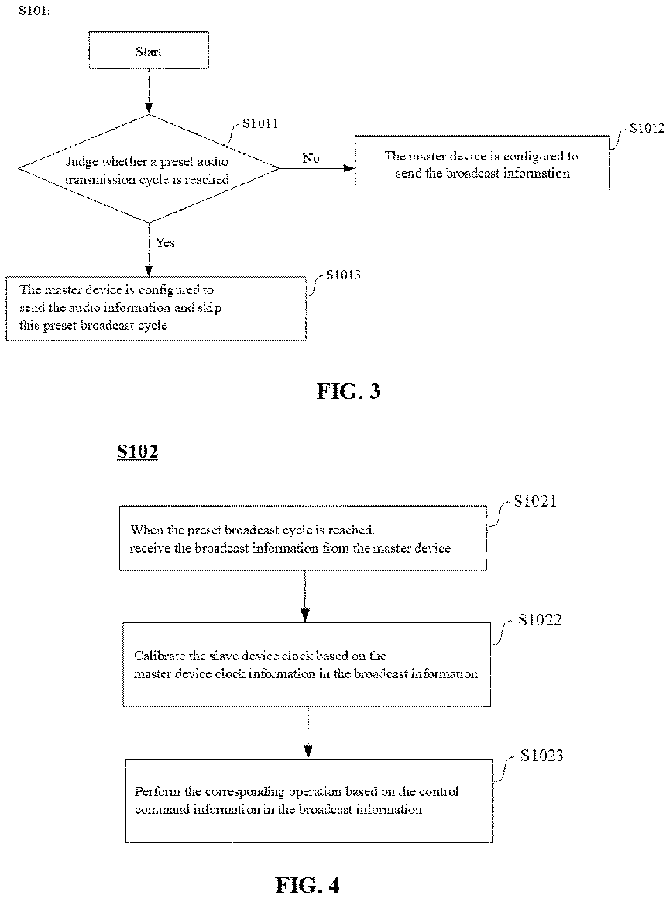

In some embodiments, the process S 101 in which the master device is further configured to send the broadcast information to the plurality of slave devices at the preset broadcast cycle may, for example, be described more specifically. FIG. 3 illustrates an exemplary flowchart of a process S 101 according to an embodiment of the present disclosure.

Referring to FIG. 3, when the preset broadcast cycle is reached, the master device is configured to: first, in step S1011, judge whether a preset audio transmission cycle is reached.

For example, there may be, for example, two timers (e.g., a first timer and a second timer) in the master device, where the first timer is timed at a time interval of the preset broadcast cycle and, when the preset broadcast cycle is reached, a broadcast trigger signal (identifying the reaching of the preset broadcast cycle) is sent to the master device and the timer is cleared and re-timed. The second timer is timed at a time interval of the preset audio transmission cycle and, when the preset audio transmission cycle is reached, audio transmission trigger information (identifying the reaching of the audio transmission cycle) is sent to the master device and the timer is cleared and re-timed. Then, the master device may, for example, upon receiving the broadcast trigger signal from the first timer, judge whether the audio transmission cycle is reached by judging whether the audio transmission trigger signal from the second timer is currently received.

However, it should be understood that the above only provides an example of judging whether the audio transmission cycle is reached. Embodiments of the present disclosure are not limited thereto.

Based on the result of the judgment, in a case where the preset audio transmission cycle is not reached, in step S1012, the master device is configured to send the broadcast information.

Based on the result of the judgment, in a case where the preset audio transmission cycle is reached, in step S1013, the master device is configured to send the audio information and skip this preset broadcast cycle.

The skipping of this preset broadcast cycle means that the master device will not carry out the process of sending the broadcast information, i.e., it will not carry out the broadcast process in the current preset broadcast cycle and will wait for the arrival of the next preset broadcast process.

The above process may for example be described more specifically as follows: for example, the preset broadcast cycle is set to be 100 ms (e.g., as timed by the first timer), then the master device sends the broadcast information at a cycle of 100 ms; and for example, the preset audio transmission cycle is set to be 20 ms (e.g., as timed by the second timer), then the master device sends the audio information at a cycle of 20 ms. If the first timer of the master device currently indicates that a cycle time of 100 ms has been reached, the master device first confirms whether the second timer has reached a cycle time of 20 ms at this time, and if the second timer has not reached a cycle time of 20 ms at this time, it characterizes that only a preset broadcast cycle has been reached at the present time and that the preset audio transmission cycle has not been reached, and then at this time, the master device sends the broadcast information. If the second timer reaches a cycle time of 20 ms at this time, it characterizes that both the preset broadcast cycle and the preset audio transmission cycle are currently reached, then at this time, there is a time conflict between the audio transmission and the control signal transmission, and at this time, in order to satisfy the uninterrupted transmission of audio with high real-time performance of the audio system, the master device will skip this preset broadcast cycle without carrying out a broadcast process, and transmit the audio information.

Based on the foregoing, in the present application, by means of settings that when the preset broadcast cycle is reached, the master device is configured as follows: judge whether the preset audio transmission cycle is reached, and in a case where the preset audio transmission cycle is not reached, send the broadcast information; and in a case where the preset audio transmission cycle is reached, the master device is configured to send the audio information and skip this preset broadcast cycle, it is made possible in the present application, on the basis of implementing real-time transmission and synchronization control of audio in a wireless audio system by applying time-division multiplexing, to skip the current preset broadcast cycle without broadcast information transmission when there is a timing conflict between the audio transmission and the control transmission, thus making it possible to ensure good and reliable audio transmission with high real-time performance without interruption due to the influence of the control information, thereby ensuring transmission of audio with high real-time performance on the basis of the realization of synchronization control.

In some embodiments, the master device is further configured to: in a case of skipping this preset broadcast cycle, save this broadcast information and use it as broadcast information in a next preset broadcast cycle.

Based on the foregoing, by means of settings that in the case of skipping this preset broadcast cycle, this broadcast information is saved to wait for the arrival of the next preset broadcast cycle to continue to be transmitted, it is made possible to ensure that the broadcast information is well and reliably synchronized to the various devices of the audio system subsequently even in the case of failure to transmit the broadcast information in the current cycle due to the existence of a timing conflict, thereby improving the reliability of the synchronization control.

In some embodiments, the master device is configured so that: in response to sending the broadcast information, the master device performs a corresponding operation based on the control command information.

Based on the foregoing, by setting the master device to perform the corresponding operation based on the control command information after sending the broadcast information, it is made possible to further realize synchronization and cooperative control of the master device and the slave devices on the basis of realizing the synchronization control of the slave devices, thereby improving the synchronization control and reliability of the wireless audio system.

In some embodiments, the master device 210 includes, for example, a control module 211 and a communication module 212. Furthermore, the synchronization control method described above may, for example, be described even further. The control module 211 can be configured, for example, so that: when the preset broadcast cycle is reached, the control module generates the broadcast information based on the master device clock information and a current control command and transmits the broadcast information to the communication module 212; and when the preset audio transmission cycle is reached, the control module acquires audio information to be transmitted and sends the audio information to be transmitted to the communication module 212.

It should be understood that the current control command may be, for example, a command input by the user, or an instruction preset by the system. Embodiments of the present disclosure are not limited thereto.

The audio information to be transmitted may be, for example, audio information provided by the user or audio information preset by the system, or audio information processed by the system. Embodiments of the present disclosure are not limited thereto.

It should be understood that depending on the actual cycle duration of the preset broadcast cycle and the preset audio transmission cycle, the process of the control module 211 transmitting the broadcast information to the communication module 212 and the process of the control module 211 sending the audio information to be transmitted to the communication module 212 may, for example, take place at the same time, or may also take place sequentially. Embodiments of the present disclosure are not limited thereto.

The communication module 212 is configured to: determine, based on a preset rule, target sending information according to information from the control module, send the target sending information, and transmit a corresponding sending feedback to the communication module.

It should be understood that the target sending information is the information that the communication module is intended to send at the current moment and that, depending on the actual situation, the target sending information may be, for example, audio information or may also be broadcast information.

The sending feedback refers to information characterizing the state of the sending of information by the communication module, and it should be understood that embodiments of the present disclosure are not limited by the specific composition of this sending feedback.

Based on the foregoing, in the present application, by setting the master device to include a control module and a communication module, and configuring the control module so that when the preset broadcast cycle is reached, the control module generates the broadcast information based on the master device clock information and a current control command and transmits the broadcast information to the communication module; and when the preset audio transmission cycle is reached, the control module acquires audio information to be transmitted and sends the audio information to be transmitted to the communication module; and enabling the communication module to determine, based on a preset rule, target sending information according to information from the control module, send the target sending information, and transmit a corresponding sending feedback to the communication module, the broadcast process of the master device can be executed in a simpler and clearer way, thus effectively achieving good synchronization control.

In some embodiments, the process of determining the target sending information based on the preset rules may, for example, be illustrated more specifically. For example, in a case where the communication device 212 receives the broadcast information from the control device 211, the communication device 212 is configured to: first, judge whether there exists audio information to be transmitted in the communication device 212.

Based on the result of the judgment, in a case where there exists no audio information to be transmitted in the communication device 212, the communication device 212 sends the broadcast information and transmits a broadcast normal sending feedback to the control module 211.

As previously mentioned, in a case where there is no audio information to be transmitted in the communication device 212, which characterizes that only the preset broadcast cycle has been reached at the present time and that the preset audio transmission cycle has not been reached, then at this time the master device will send the broadcast information normally.

The broadcast normal sending feedback is intended to characterize that the broadcast information is successfully sent in the currently coming preset broadcast cycle.

In a case where there exists audio information to be transmitted in the communication device 212, the communication device 212 sends the audio information to be transmitted and transmits a broadcast delayed sending feedback to the control module 211.

As previously mentioned, in a case where there exists audio information to be transmitted in the communication device, it characterizes that both the preset broadcast cycle and the preset audio transmission cycle are currently reached, then at this time, there is a time conflict between the audio transmission and the control signal transmission, and at this time, in order to satisfy the uninterrupted transmission of audio with high real-time performance of the audio system, the master device will skip this preset broadcast cycle without carrying out a broadcast process, and transmit the audio information.

The broadcast delayed sending feedback is intended to characterize that the broadcast information is not sent in the currently coming preset broadcast cycle.

In some embodiments, when the audio information to be transmitted is received in the communication module (e.g., when the preset audio transmission cycle is reached), the communication module is configured, for example, to send the audio information without sending a feedback to the control module.

Based on the foregoing, in the present application, by means of settings that the communication device is configured as follows: judge whether there exists audio information to be transmitted in the communication device; and in a case where there exists no audio information to be transmitted in the communication device, the communication device sends the broadcast information and transmits a broadcast normal sending feedback to the control module; and in a case where there exists audio information to be transmitted in the communication device, the communication device sends the audio information to be transmitted and transmits a broadcast delayed sending feedback to the control module, the communication device is enabled to determine target sending information based on the information from the control module in a simple and convenient manner, thereby effectively avoiding the impact on the transmission of audio information due to the timing conflict between the broadcast information and the audio information (e.g., resulting in an interruption of the transmission of the audio information, etc.) and, by passing the corresponding sending feedback to the control module in a timely manner, it is made convenient for the control module to carry out the subsequent corresponding processing.

In some embodiments, the control module 211 is configured to: in response to the broadcast normal sending feedback, control the master device according to the broadcast information to perform a corresponding operation; and in response to the broadcast delayed sending feedback, retain the current broadcast information, and wait for a next preset broadcast cycle.

Based on the foregoing, by setting the control module 211 to perform different operations in response to different sending feedback, it is made possible to synchronize the operations of the master device and the slave devices on the basis of synchronization control of the operations of the various slave devices when the broadcast information is sent, thereby achieving good synchronization of the wireless audio system. Moreover, when the broadcast information is not sent, the corresponding information is well saved to wait for the next sending, thus improving the reliability.

In some embodiments, the process S102 in which each of the plurality of slave devices receives the broadcast information from the master device at the preset broadcast cycle and performs a corresponding operation based on the broadcast information may be illustrated more specifically. FIG. 4 illustrates an exemplary flowchart of a process S102 according to an embodiment of the present disclosure.

Referring to FIG. 4, each of the slave devices is configured to: first, in step S1021, when the preset broadcast cycle is reached, receive the broadcast information from the master device.

For example, the slave device may, for example, have a slave device timer which is timed at a time interval of the preset broadcast cycle, and when the preset broadcast cycle is reached, a broadcast receiving signal is sent to the slave device, and the slave device receives the broadcast information from the master device in response to the broadcast receiving signal. However, it should be understood that only one example is given above, and embodiments of the present disclosure are not limited thereto.

The slave device may for example further include a slave device communication module and a slave device control module, where the slave device communication module for example receives the broadcast information from the master device and transmits the broadcast information to the slave device control module.

In step S 1022, the slave device clock is calibrated based on the master device clock information in the broadcast information.

The slave device clock is information characterizing the timing state that the slave device currently has, which may be, for example, a slave device clock signal. For example, the slave device clock information may be set to coincide with the master device clock information to enable timing synchronization between the master and slave devices for subsequent precise implementation of the sending and receiving processes.

In step S1023, the corresponding operation is performed based on the control command information in the broadcast information.

It should be understood that the above steps S 1022 and S 1023 can be performed simultaneously, or can be performed in sequence or in reverse order. Embodiments of the present disclosure are not limited by the order in which the two are performed.

Based on the foregoing, in the present application, after the slave device receives broadcast information from the master device each time, by calibrating the slave device clock based on the master device clock information in the broadcast information, the synchronization of the clocks of the master device and the slave devices can be ensured, so as to effectively avoid the problem that the slave devices cannot well receive the broadcast information from the master device due to the large difference in the receiving and sending clocks of the master and slave devices after several loops caused by the accumulation of system clock errors between different devices, thus improving the reliability and robustness of the synchronization control method.

In some embodiments, performing the corresponding operation based on the control command information in the broadcast information includes: first, acquiring a device type of the slave device; then determining, based on the device type of the slave device, target control command information corresponding to the device type of the slave device from the control command information; and finally, performing the corresponding operation based on the target control command information.

The device type of the slave device is, for example, information characterizing the category of the slave device, and the device type may include, for example, a lighting device, an acoustic device, a headphone device, a keyboard device, a microphone device, a processor device, and the like. Embodiments of the present disclosure are not limited thereto.

Determining, based on the device type of the slave device, target control command information corresponding to the device type of the slave device from the control command information may for example be described more specifically. For example, the control command information in the received broadcast information may include, for example, a plurality of items of information such as display control information, playback control information, audio feature information, where different types of devices correspond to different control information. For example, the lighting device and the keyboard device correspond, for example, to the display control information, the acoustic device, the headphone device, and the microphone device correspond, for example, to the playback control information, and the processor device corresponds, for example, to the audio feature information. Then the slave device may, for example, select corresponding information from the control command information based on its device type as the target control command information, and perform the corresponding operation based on the target control command information.

Based on the foregoing, in the present application, by setting the slave device to determine, based on the device type, target control command information corresponding to the device type of the slave device from the control command information, and to perform an operation corresponding to the target control command information, it is made possible that, on the basis of the master device sending the same control command information, the plurality of slave devices can still realize different and distinctive response modes based on their own types on the basis of synchronization response to the control command of the master device, so as to enrich the function of the wireless audio system and the audio visualization form.

In some embodiments, when the slave device reaches the preset broadcast cycle, the slave device is configured as follows: first, judge whether the preset audio transmission cycle is reached; and in a case where the preset audio transmission cycle is not reached, the slave device is configured to receive the broadcast information; and in a case where the preset audio transmission cycle is reached, the slave device is configured to receive the audio information and skip this preset broadcast cycle.

For example, there may be, for example, two slave device timers (e.g., a third timer and a fourth timer) in the slave device, where the third timer is timed at a time interval of the preset broadcast cycle and, when the preset broadcast cycle is reached, a broadcast receiving signal (identifying the reaching of the preset broadcast cycle) is sent to the slave device and the timer is cleared and re-timed. The fourth timer is timed at a time interval of the preset audio transmission cycle and, when the preset audio transmission cycle is reached, audio receiving information (identifying the reaching of the audio transmission cycle) is sent to the slave device and the timer is cleared and re-timed. Then, the slave device may, for example, upon receiving the broadcast trigger signal from the third timer, judge whether the audio transmission cycle is reached by judging whether the audio transmission trigger signal from the fourth timer is currently received.

However, it should be understood that the above only provides an example of judging whether the audio transmission cycle is reached. Embodiments of the present disclosure are not limited thereto.

The skipping of this preset broadcast cycle means that the slave device will not carry out the process of receiving the broadcast information, i.e., it will not carry out the broadcast information receiving process in the current preset broadcast cycle and will wait for the arrival of the next preset broadcast process.

Based on the foregoing, in the present application, by means of settings that when the slave device reaches the preset broadcast cycle, the slave device is configured as follows: first, judge whether the preset audio transmission cycle is reached; and in a case where the preset audio transmission cycle is not reached, the slave device is configured to receive the broadcast information; and in a case where the preset audio transmission cycle is reached, the slave device is configured to receive the audio information and skip this preset broadcast cycle, it is made possible in the present application, on the basis of implementing real-time transmission and synchronization control of audio in a wireless audio system by applying time-division multiplexing, to skip the current preset broadcast cycle without broadcast information receiving when there is a timing conflict between the audio transmission and the control transmission, thus making it possible to ensure good and reliable transmission of audio with high real-time performance without interruption due to the influence of the control information, thereby ensuring high real-time transmission of audio on the basis of the realization of synchronization control. In some embodiments, a communication mode between the master device and the slave device is a Bluetooth communication mode, and the master device and the slave device comply with a Bluetooth communication protocol, for example, the Bluetooth 5.0 communication protocol, the Bluetooth core spec 5.0 and above communication protocol.

By making the master device and the slave devices comply with the same Bluetooth communication protocol in the process of sending and receiving broadcast information and of sending and receiving audio information, the current Bluetooth audio transmission protocol can be reused to realize the transmission of the control command, so as to realize synchronization control as well as audio transmission with high real-time performance in a simple and convenient way.

In some embodiments, the slave device includes at least one of a lighting device, an acoustic device, a headphone device, a keyboard device, a microphone device, and a processor device.

By setting the slave device in the wireless audio system to include at least one of a lighting device, an acoustic device, a headphone device, a keyboard device, a microphone device, and a processor device, it is made possible to cause the wireless audio system to include a plurality of different types of devices, so as to increase the diversity of the wireless audio system, and to improve the human-computer interaction experience of the wireless audio system.

According to another aspect of the present disclosure, a wireless audio system 200 is further proposed, including a master device 210 and a plurality of slave devices 220, the master device 210 communicating wirelessly with the plurality of slave devices 220.

The wireless audio system is configured to execute the synchronization control method 100 for a wireless audio system as previously described, and has the functions as previously described.

The program portion of the technology may be considered a "product" or "artifact" existing in the form of executable code and/or associated data, which is engaged or implemented through a computer-readable medium. A tangible, permanent storage medium may include the memory or storage used in any computer, processor, or similar device or related module. For example, various semiconductor memories, tape drives, disk drives, or any similar devices capable of providing storage functions for software.

The present application uses specific words to describe embodiments of the present application. For example, "first/second embodiment", "an embodiment", and/or "some embodiments" means a feature, structure, or characteristic associated with at least one embodiment of the present application. Accordingly, it should be emphasized and noted that "an embodiment" or " one embodiment" or "an alternative embodiment" referred to two or more times in different places in this specification does not necessarily refer to the same embodiment. In addition, certain features, structures, or characteristics of one or more embodiments of the present application may be combined as appropriate.

In addition, it can be understood by those skilled in the art that aspects of the present application may be illustrated and described by a number of patentable categories or circumstances, including any new and useful process, machine, product, or combination of substances, or any new and useful improvement thereof. Accordingly, aspects of the present application may be performed entirely by hardware, may be performed entirely by software (including firmware, resident software, microcode, or the like), or may be performed by a combination of hardware and software. All of the above hardware or software may be referred to as "data blocks", "modules", "engines", "units", "components" or "systems". Additionally, aspects of the present application may be manifested as a computer product disposed in one or more computer-readable media, the product including computer-readable program code.

Unless otherwise defined, all terms used herein, including technical and scientific terms, have the same meaning as commonly understood by those of ordinary skill in the art to which the present invention belongs. It should also be understood that terms such as those defined in common dictionaries should be construed as having a meaning consistent with their meaning in the context of the relevant technology and should not be construed with idealized or extremely formalized meanings unless expressly defined as such herein.

The foregoing is a description of the present invention and should not be considered a limitation thereof. Although several exemplary embodiments of the present invention are described, it will be readily understood by those skilled in the art that many modifications can be made to the exemplary embodiments without departing from the novel teachings and advantages of the present invention. Accordingly, all such modifications are intended to be encompassed within the scope of the present invention as defined by the claims. It should be understood that the foregoing is a description of the present invention and should not be considered to be limited to the particular embodiments as disclosed, and that modifications to the disclosed embodiments, as well as other embodiments, are intended to be included within the scope of the appended claims. The present invention is limited by the claims and their equivalents.

## Claims

1. A synchronization control method for a wireless audio system, wherein the wireless audio system comprises a master device and a plurality of slave devices, the master device communicating wirelessly with the plurality of slave devices and the master device sending audio information to the plurality of slave devices at a preset audio transmission cycle; and the method comprises:
the master device being further configured to send broadcast information to the plurality of slave devices at a preset broadcast cycle, wherein the broadcast information comprises master device clock information and control command information; and
each of the plurality of slave devices receiving the broadcast information from the master device at the preset broadcast cycle and performing a corresponding operation based on the broadcast information;
and wherein at the same moment, the master device sends only one of the audio information and the broadcast information.

2. The synchronization control method according to claim 1, wherein the control command information comprises at least one of audio display control information, playback control information, and audio feature information.

3. The synchronization control method according to claim 1 or 2, wherein when the preset broadcast cycle is reached, the master device is configured as follows:
judge whether the preset audio transmission cycle is reached; and
in a case where the preset audio transmission cycle is not reached, the master device is configured to send the broadcast information; and
in a case where the preset audio transmission cycle is reached, the master device is configured to send the audio information and skip this preset broadcast cycle.

4. The synchronization control method according to claim 3, wherein the master device is further configured to: in a case of skipping this preset broadcast cycle, save this broadcast information and use it as broadcast information in a next preset broadcast cycle.

5. The synchronization control method according to claim 3 or 4, wherein the master device is configured so that: in response to sending the broadcast information, the master device performs a corresponding operation based on the control command information.

6. The synchronization control method according to any preceding claim, wherein the master device comprises a control module and a communication module, and wherein the control module is configured so that:
when the preset broadcast cycle is reached, the control module generates the broadcast information based on the master device clock information and a current control command and transmits the broadcast information to the communication module; and
when the preset audio transmission cycle is reached, the control module acquires audio information to be transmitted and sends the audio information to be transmitted to the communication module,
wherein the communication module is configured to: determine, based on a preset rule, target sending information according to information from the control module, send the target sending information, and transmit a corresponding sending feedback to the communication module.

7. The synchronization control method according to claim 6, wherein:
in a case where the communication device receives the broadcast information from the control device, the communication device is configured as follows:
judge whether there exists audio information to be transmitted in the communication device; and
in a case where there exists no audio information to be transmitted in the communication device, the communication device sends the broadcast information and transmits a broadcast normal sending feedback to the control module; and
in a case where there exists audio information to be transmitted in the communication device, the communication device sends the audio information to be transmitted and transmits a broadcast delayed sending feedback to the control module.

8. The synchronization control method according to claim 7, wherein the control module is configured to:
in response to the broadcast normal sending feedback, control the master device according to the broadcast information to perform a corresponding operation; and
in response to the broadcast delayed sending feedback, retain the current broadcast information, and wait for a next preset broadcast cycle.

9. The synchronization control method according to any preceding claim, wherein each of the plurality of slave devices receiving the broadcast information from the master device at the preset broadcast cycle and performing a corresponding operation based on the broadcast information comprises:
when the preset broadcast cycle is reached, receiving the broadcast information from the master device;
calibrating the slave device clock based on the master device clock information in the broadcast information; and
performing the corresponding operation based on the control command information in the broadcast information.

10. The synchronization control method according to claim 9, wherein performing the corresponding operation based on the control command information in the broadcast information comprises:
acquiring a device type of the slave device;
determining, based on the device type of the slave device, target control command information corresponding to the device type of the slave device from the control command information; and
performing the corresponding operation based on the target control command information.

11. The synchronization control method according to any preceding claim, wherein when the slave device reaches the preset broadcast cycle, the slave device is configured as follows:
judge whether the preset audio transmission cycle is reached; and
in a case where the preset audio transmission cycle is not reached, the slave device is configured to receive the broadcast information; and
in a case where the preset audio transmission cycle is reached, the slave device is configured to receive the audio information and skip this preset broadcast cycle.

12. The synchronization control method according to any preceding claim, wherein a communication mode between the master device and the slave device is a Bluetooth communication mode, and the master device and the slave device comply with a Bluetooth communication protocol.

13. The synchronization control method according to any preceding claim, wherein the slave device comprises at least one of a lighting device, an acoustic device, a headphone device, a keyboard device, a microphone device, and a processor device.

14. A wireless audio system, comprising:
a master device; and
a plurality of slave devices, the master device communicating wirelessly with the plurality of slave devices;
and wherein the wireless audio system is configured to execute the synchronization control method for a wireless audio system according to any one of the preceding claims 1 to 13.
